# EUROPÄISCHE PATENTANMELDUNG

(11) **EP 2 018 922 A2**
(43) Veröffentlichungstag der Anmeldung: **28.01.2009**
(21) Anmeldenummer: 08104132.9
(22) Anmeldetag: 28.05.2008
(51) Int. Cl.: B23D 47/02, B23D 47/04

(54) **Kreissägenständer**

(30) Priorität: 27.07.2007 DE 102007000409
(71) Anmelder: HILTI Aktiengesellschaft, 9494 Schaan (LI)
(72) Erfinder: Heinrichs, Viktor, 86836, Untermeitingen (DE); Stempfhuber, Johannes, 86899, Landsberg (DE)
(74) Vertreter: Wildi, Roland

(57) **Zusammenfassung**

Ein Kreissägenständer (2) für die Herstellung von Schnitten mittels einer handgeführten Kreissäge (4) weist eine Festlegeeinrichtung (6) für die Festlegung an einer Arbeitsplatte (10), einen Aufnahmebereich (14) für die Aufnahme eines zu bearbeitenden Werkstückes (16), und eine Führungseinrichtung (42) auf, die eine Führungsebene für eine Anlegeplatte (40) der Kreissäge (4) bildet. Es ist vorgesehen, dass der Aufnahmebereich (14) verstellbar durch eine Spanneinrichtung (12) begrenzt ist, die ein mit der Festlegeeinrichtung (6) fest verbundenes festes Spannelement und ein gegenüber dem festen Spannelement verlagerbares Spannelement aufweist, wobei die Führungseinrichtung (42) an einem der Spannelemente gelagert ist.

## Beschreibung

Die Erfindung betrifft einen Kreissägenständer für die Herstellung von Schnitten mittels einer handgeführten Kreissäge mit den Merkmalen gemäss dem Oberbegriff von Patentanspruch 1. Dabei weist der Kreissägenständer eine Festlegeeinrichtung für seine Festlegung an einer Arbeitsplatte, einen Aufnahmebereich für die Aufnahme eines zu bearbeitenden Werkstückes, und eine Führungseinrichtung auf, die eine Führungsebene für eine Anlegeplatte der Kreissäge bildet.

Bei derartigen Kreissägenständern wird das zu bearbeitende Werkstück in einer gewünschten Position im Aufnahmebereich angeordnet und festgelegt. Anschliessend kann mit einer handelsüblichen Kreissäge ein Schnitt entlang der Führungseinrichtung ausgeführt werden, wobei die Anlageplatte auf die Führungsebene aufgesetzt und entlang derselben verschoben wird. Hierdurch ist ein besonders exakter Schnitt möglich.

Aus der WO 03/041907 A1 ist eine Vorrichtung zum Führen einer handhaltbaren Säge bekannt. Diese weist zwei parallele Führungsschienen auf, auf denen jeweils ein Randbereich einer Anlageplatte der Säge aufliegt. Die Führungsschienen sind dabei an ihren Enden über eine durch Konsolenelemente gebildete Festlegeeinrichtung an einem Werktisch gehalten, wobei die Konsolenelemente jeweils höhenverstellbare Schraubverbindungen mit dem Werktisch aufweisen.

Nachteilig an der bekannten Vorrichtung ist, dass diese nur durch Lösen und Wiederanziehen aller vier Schraubverbindungen auf verschiedene Höhen des zu bearbeitenden Werkstückes eingestellt werden kann. Ferner dient bei dieser Vorrichtung zur Festlegung des Werkstückes im Wesentlichen eine flache Oberseite des Werktisches, was insbesondere die Bearbeitung von Werkstücken mit runden Querschnitten, wie Rohren, erschwert beziehungsweise zusätzliche Mittel zur sicheren Festlegung erforderlich macht, die jedoch wiederum den Bedienungsaufwand zusätzlich erhöhen.

Der vorliegenden Erfindung liegt die Aufgabe zugrunde, bei einem Kreissägenständer die genannten Nachteile zu vermeiden und eine komfortable und schnelle Einstellung auf unterschiedlich dimensionierte Werkstücke zu erhöhen sowie eine sichere Festlegung, insbesondere auch von Werkstücken mit rundem Querschnitt zu gewährleisten.

Erfindungsgemäss wird diese Aufgabe durch einen Kreissägenständer mit den Merkmalen von Patentanspruch 1 gelöst, wobei der Aufnahmebereich verstellbar durch eine Spanneinrichtung begrenzt ist, die ein mit der Festlegeeinrichtung fest verbundenes festes Spannelement und ein gegenüber dem festen Spannelement verlagerbares Spannelement aufweist, wobei die Führungseinrichtung an einem der Spannelemente gelagert ist. Mittels einer derartigen Spanneinrichtung ist eine sichere Fixierung des zu bearbeitenden Werkstückes an dem Kreissägenständer möglich, wobei durch die direkte Verbindung der Spanneinrichtung mit der Führungseinrichtung eine besonders einfache und kompakte Konstruktion des Kreissägenständers sowie eine komfortable und schnelle Einstellung auf ein bestimmtes zu bearbeitendes Werkstück ermöglicht wird.

In einer besonders bevorzugten Ausführungsform ist das verlagerbare Spannelement über eine einzelne Handhabe gegenüber dem festen Spannelement verstellbar, was eine besonders komfortable und schnelle Verstellbarkeit des Kreissägenständers zur Anpassung an unterschiedlich dimensionierte Werkstücke ermöglicht.

Vorteilhafterweise ist die Führungsebene durch eine einzelne Führungsplatte der Führungseinrichtung gebildet, wodurch eine kompakte Konstruktion ermöglicht und eine exakte Führung gewährleistet werden kann.

In einer bevorzugten Ausführungsform ist das verlagerbare Spannelement durch eine Spannschlinge und das feste Spannelement durch eine Anschlagseite eines Rahmens gebildet, der die Führungseinrichtung trägt. Hierdurch sind insbesondere Werkstücke mit einem runden oder mehr als vierseitigen Querschnitt sicher fixierbar.

Vorteilhafterweise ist dabei die einzelne Handhabe durch ein verdrehbares Gewindeelement gebildet und die Spannschlinge mittels einem Zugglied verspannbar, das über das Gewindeelement linear verlagerbar ist. Hierdurch ist die Spannschlinge besonders einfach zwischen einer Spannstellung und einer Lösestellung verstellbar.

In einer alternativen bevorzugten Ausführungsform ist das feste Spannelement durch eine erste Spannbacke und das bewegliche Spannelement durch eine gegenüber der ersten Spannbacke verlagerbare zweite Spannbacke gebildet, die an einem Träger angeordnet ist, der die Führungseinrichtung trägt. Hierdurch kann eine besonders sichere Festlegung von Werkstücken mit rechteckigem Querschnitt erzielt werden.

Dabei ist es besonders günstig, wenn der Träger mittels einem verschwenkbaren Spannhebel zwischen einer Spannstellung und einer Lösestellung hin- und her verbringbar ist, was eine besonders schnelle Verstellung der Spanneinrichtung zwischen einer Spannstellung und einer Lösestellung ermöglicht.

Dabei ist es günstig, wenn die Spannbacken jeweils zwei zueinander entgegen gesetzt geneigte Klemmflächen aufweisen, wodurch zusätzlich auch Werkstücke mit einem im Wesentlichen runden Querschnitt sicher eingespannt werden können.

Die Erfindung wird nachstehend anhand eines Ausführungsbeispieles näher erläutert. Es zeigen:
- Fig. 1: eine Ansicht einer ersten Ausführungsform eines erfindungsgemässen Kreissägenständers und
- Fig. 2: eine Ansicht einer zweiten Ausführungsform eines erfindungsgemässen Kreissägenständers.

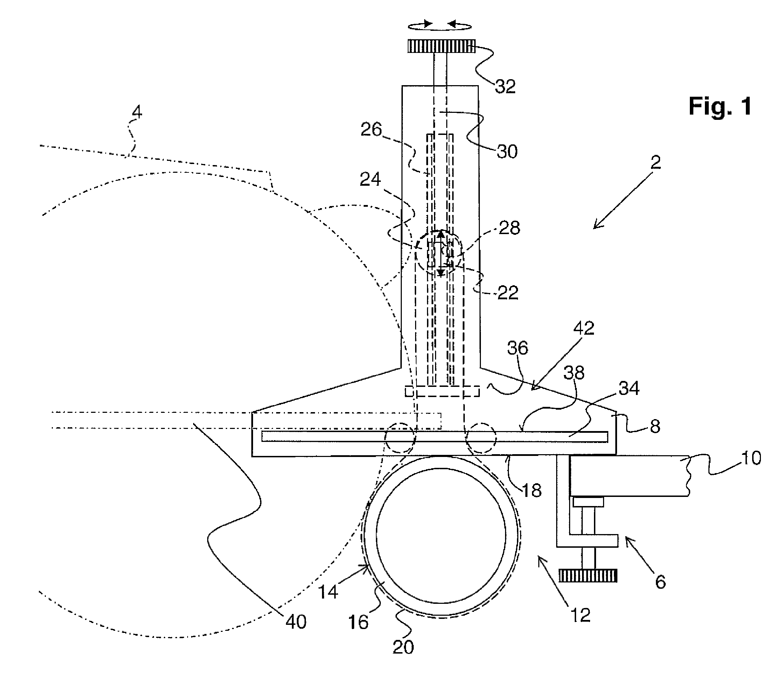

Fig. 1 zeigt einen Kreissägenständer 2 zum Herstellen von Schnitten mittels einer handgeführten Kreissäge 4. Dabei weist der Kreissägenständer 2 eine Festlegeeinrichtung 6 in Form einer Schraubklemme auf, mittels der ein Rahmen 8 des Kreissägenständers 2 an einer Arbeitsplatte 10, die beispielsweise Bestandteil eines Werktisches sein kann, festgelegt werden kann.

Der Kreissägenständer 2 weist eine Spanneinrichtung 12 auf, die einen Aufnahmebereich 14 definiert, in dem ein Werkstück 16, beispielhaft in Form eines Rohres festlegbar ist. Hierzu weist die Spanneinrichtung 12 eine als festes Spannelement fungierende Anschlagseite 18 des Rahmens 8 und eine als verlagerbares Spannelement fungierende Spannschlinge 20 auf. Die Spannschlinge 20 kann dabei beispielsweise durch ein seil-, band- oder kettenartiges Element gebildet sein, das je nach beabsichtigtem Verwendungsbereich auch eine gewisse Elastizität aufweisen kann.

Zum Spannen und Lösen der Spanneinrichtung 12 ist an dem Rahmen 8 ein Zugglied 22 in Form eines Nutsteins translatorisch verlagerbar, den die Spannschlinge 20 unter Zwischenlage eines Umlenkelementes 24 umgreift. Hierzu ist der Nutstein verschiebbar aber unverdrehbar in einer Nut 26 geführt und weist eine Gewindebohrung 28 auf die mit einem Gewindestab 30 zusammen wirkt, der von Aussen mittels einer als Rändelrad 32 ausgebildeten Handhabe verdrehbar ist. Durch Verdrehen des Rändelrades ist das Zugglied 22 in die eine oder andere Richtung verlagerbar, wobei der Aufnahmebereich 14 aufgeweitet oder verkleinert wird und somit die Spanneinrichtung 12 in eine Spannstellung zur Fixierung des zu bearbeitenden Werkstückes 16 oder in eine Lösestellung überführbar ist, in der beispielsweise das zuvor bearbeitete Werkstück 16 wieder aus der Spanneinrichtung 12 entfernt werden kann.

Zur Führung der Kreissäge 4 während eines Schnittvorganges ragt am Rahmen 8 eine Führungsplatte 34 senkrecht von einer Stirnseite 36 desselben ab, deren Oberseite 38 eine geschlossene Führungsebene für eine Anlegeplatte 40 der Kreissäge 4 bildet. Auf diese Weise bildet die Führungsplatte 34 zusammen mit der Stirnseite 36 des Rahmens 8 eine Führungseinrichtung 42, entlang der die Kreissäge 2 beim Schneidvorgang sicher geführt werden kann.

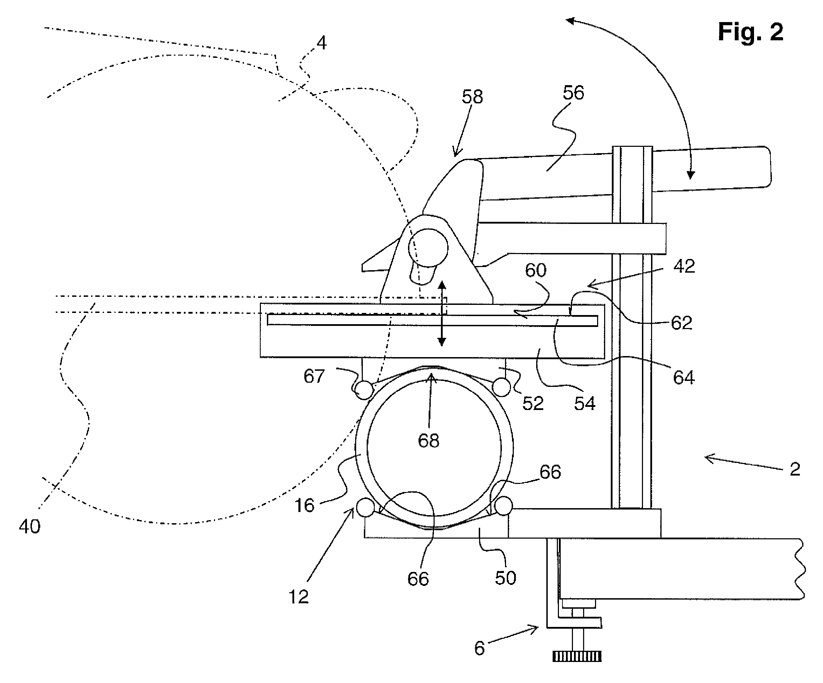

Fig. 2 zeigt eine weiter Ausführungsform des Kreissägenständers 2, wobei Elemente mit entsprechender Funktion die gleichen Bezugszeichen aufweisen wie in Fig. 1.

Der wesentliche Unterschied der Ausführungsform nach Fig. 2 gegenüber der oben beschriebenen Ausführungsform besteht darin, dass die Spanneinrichtung 12 eine als festes Spannelement fungierende erste Spannbacke 50 und eine als verlagerbares Spannelement fungierende zweite Spannbacke 52 aufweist.

Die erste Spannbacke 50 ist dabei fest mit der Festlegeeinrichtung 6 verbunden während die zweite Spannbacke 52 an einem Träger 54 vorgesehen ist, der mittels einer durch einen als Handhabe fungierenden verschwenkbaren Spannhebel 56 betätigbaren Schnellspannvorrichtung 58 in die Spannstellung und Lösestellung der Spanneinrichtung 12 hin- und herverstellbar ist.

Die Führungseinrichtung 42 wird in diesem Fall durch eine Stirnfläche 60 des Trägers 54 und eine Oberfläche 62 einer Führungsplatte 64 gebildet, die wiederum senkrecht von der Stirnfläche 60 abragt.

Die Funktionsweise der Ausführungsform nach Fig. 2 ist im Wesentlichen die gleiche wie in Fig. 1. Lediglich erfolgt nun die Fixierung des zu bearbeitenden Werkstückes 16 mittels den beiden Spannbacken 50, 52.

Um hierbei neben der Festlegung von Werkstücken 16 mit rechteckigem Querschnitt auch, wie dargestellt, Werkstücke mit einem runden Querschnitt sicher befestigen zu können, weisen die beiden Spannbacken 50, 52 jeweils zwei zueinander entgegen gesetzt geneigte Klemmflächen 66 auf, wodurch jeweils eine Vertiefung 68 entsteht an der das Werkstück 16 sicher festgelegt werden kann. Zudem sind an den beiden Spannbacken 50, 52 an den Aussenrändern jeweils zwei Spannrollen 67 vorhanden, wodurch Rohre grösseren Durchmessers (grösser als die Schnitttiefe des Kreissägeblattes) drehbar verspannt und somit umfänglich durchgesägt werden können.

Zur Durchführung des Schneidvorganges wird die Anlegeplatte 40 der Kreissäge 4 nun an die Führungsplatte 64 angelegt und auf dieser verschoben, während die Stirnseite 60 für eine seitliche Führung sorgt.

## Patentansprüche

1. Kreissägenständer (2) für die Herstellung von Schnitten mittels einer handgeführten Kreissäge (4)
mit einer Festlegeeinrichtung (6) für die Festlegung an einer Arbeitsplatte (10),
einem Aufnahmebereich (14) für die Aufnahme eines zu bearbeitenden Werkstückes (16), und
einer Führungseinrichtung (42), die eine Führungsebene für eine Anlegeplatte (40) der Kreissäge (4) bildet,
**dadurch gekennzeichnet, dass** der Aufnahmebereich (14) verstellbar durch eine Spanneinrichtung (12) begrenzt ist, die ein mit der Festlegeeinrichtung (6) fest verbundenes festes Spannelement und ein gegenüber dem festen Spannelement verlagerbares Spannelement aufweist, wobei die Führungseinrichtung (42) an einem der Spannelemente gelagert ist.

2. Kreissägenständer nach Anspruch 1 oder 2, **dadurch gekennzeichnet, dass** das verlagerbare Spannelement über eine einzelne Handhabe gegenüber dem festen Spannelement verstellbar ist.

3. Kreissägenständer nach Anspruch 1, **dadurch gekennzeichnet, dass** die Führungsebene durch eine einzelne Führungsplatte (34) der Führungseinrichtung (42) gebildet ist.

4. Kreissägenständer nach einem der Ansprüche 1 bis 3, **dadurch gekennzeichnet, dass** das verlagerbare Spannelement durch eine Spannschlinge (20) und das feste Spannelement durch eine Anschlagseite (18) eines Rahmens (8) gebildet ist, der die Führungseinrichtung (42) trägt.

5. Kreissägenständer nach Anspruch 4, **dadurch gekennzeichnet, dass** die einzelne Handhabe durch ein Gewindeelement gebildet und die Spannschlinge (20) mittels einem Zugglied (22) verspannbar ist, das über das Gewindeelement linear verlagerbar ist.

6. Kreissägenständer nach Anspruch 1 bis 3, **dadurch gekennzeichnet, dass** das feste Spannelement durch eine erste Spannbacke (50) und das bewegliche Spannelement durch eine gegenüber der ersten Spannbacke (50) verlagerbare zweite Spannbacke (52) gebildet ist, die an einem Träger (54) angeordnet ist, der die Führungseinrichtung (42) trägt.

7. Kreissägenständer nach Anspruch 6, **dadurch gekennzeichnet, dass** der Träger (54) mittels einem verschwenkbaren Spannhebel (56) zwischen einer Spannstellung und einer Lösestellung hin- und her verbringbar ist.

8. Kreissägenständer nach Anspruch 6 oder 7, **dadurch gekennzeichnet, dass** die Spannbacken (50,52) jeweils eine Vertiefung (68) aufweisen.
